# EUROPEAN PATENT SPECIFICATION

(11) **EP 1 191 331 B1**
(45) Date of publication and mention of the grant of the patent: **24.02.2016**
(21) Application number: 01870192.0
(22) Date of filing: 05.09.2001
(51) Int. Cl.: B82Y 35/00, G01Q 70/06, G01Q 70/16

(54) **Method for manufacturing tips and probes for a STM or an AFM**
Herstellungsverfahren für Spitzen und Probenköpfe von STM's oder AFM's
Procédé de fabrication de la pointe et de l'éprouvette d'un STM ou d'un AFM

(30) Priority: 18.09.2000 US 233276 P; 27.10.2000 EP 00870246
(43) Date of publication of application: 27.03.2002
(73) Proprietor: IMEC, 3001 Leuven (BE)
(72) Inventor: Hantschel, Thomas, 39439 Amesdorf (DE); Vandervorst, Wilfried, 2800 Mechelen (BE)
(74) Representative: Van Malderen, Joëlle

(56) References cited:
- EP-A- 1 202 047
- WO-A-99/56176
- HANTSCHEL T ET AL: "Highly conductive diamond probes for scanning spreading resistance microscopy" APPLIED PHYSICS LETTERS, 20 MARCH 2000, AIP, USA, vol. 76, no. 12, pages 1603-1605, XP002265483 ISSN: 0003-6951
- HANTSCHEL T ET AL: "FABRICATION AND USE OF METAL TIP AND TIP-ON-TIP PROBES FOR AFM-BASED DEVICE ANALYSIS" PROCEEDINGS OF THE SPIE, SPIE, BELLINGHAM, VA, US, vol. 3512, 1998, pages 92-103, XP000949405 ISSN: 0277-786X
- PATENT ABSTRACTS OF JAPAN vol. 1998, no. 14, 31 December 1998 (1998-12-31) -& JP 10 246729 A (CANON INC), 14 September 1998 (1998-09-14)
- HANTSCHEL T ET AL: "Peel-off probe: A cost-effective probe for electrical atomic force microscopy" MTERIALS AND DEVICES CHARACTERIZATION IN MICROMACHINING III;SANTA CLARA, CA, USA SEP 18-SEP 19 2000, vol. 4175, 2000, pages 50-59, XP000984746 Proc SPIE Int Soc Opt Eng;Proceedings of SPIE - The International Society for Optical Engineering 2000 Society of Photo-Optical Instrumentation Engineers, Bellingham, WA, USA
- HANTSCHEL T ET AL: "Mounting of moulded AFM probes by soldering" MTERIALS AND DEVICES CHARACTERIZATION IN MICROMACHINING III;SANTA CLARA, CA, USA SEP 18-SEP 19 2000, vol. 4175, 2000, pages 62-73, XP000984745 Proc SPIE Int Soc Opt Eng;Proceedings of SPIE - The International Society for Optical Engineering 2000 Society of Photo-Optical Instrumentation Engineers, Bellingham, WA, USA
- "Conference Materials and Device Characterization in Micromachining III" PROCEEDINGS OF SPIE VOL.4175 (PROGRAM), [Online] 20 July 2000 (2000-07-20), pages 1-4, XP002265484 Retrieved from the Internet: <URL:http://www.spie.org/web/meetings/prog rams/mf00/confs/4175.html> [retrieved on 2003-12-17]

## Description

### Field of the invention

The present invention is generally related to a scanning tunnelling or atomic force microscope and more particularly to the manufacturing of tip and probe used in said scanning tunnelling or atomic force microscope.

### Background of the invention/State of the Art

Scanning tunnelling microscopy (STM) and electrical atomic force microscopy (AFM) enables us today to carry out electrical and/or topographical measurements on modern semiconductor devices with nanometer (nm) spatial resolution. These measurements are done by scanning at least one small conductive tip over the device surface and recording at the same time topographical information and/or electrical signals.

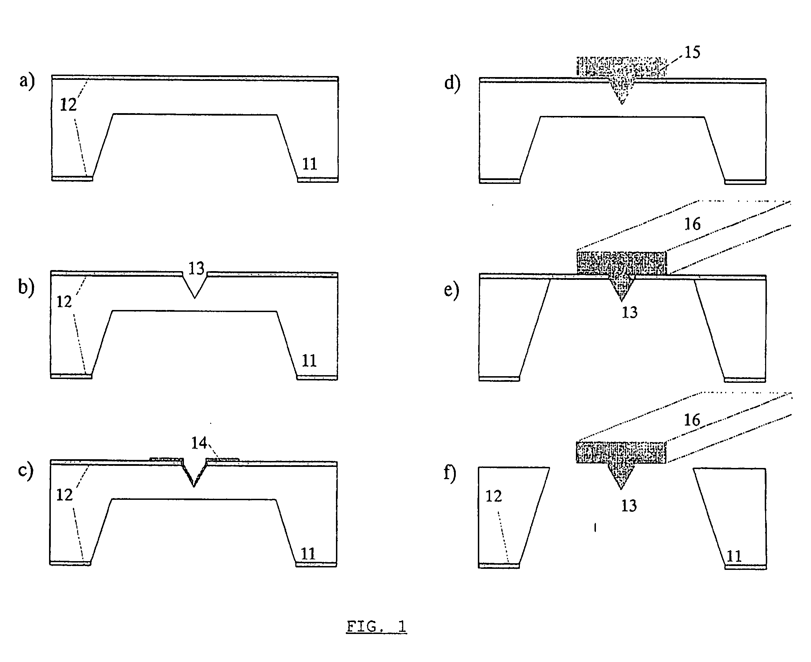

Metal is preferably used as tip material due to its excellent electrical conductivity. Silicon (Si) tips with a thin metal coating, typically 10-25 nm thick, are commercially available since the early 1990's but the metal coatings rapidly wear off. Therefore solid metal pyramids made by the so-called moulding technique have been developed which are integrated into Si cantilevers or metal cantilevers. The metal cantilever probes, also called full metal probes, are preferred because they are highly conductive and require fewer process steps. In European Patent No 0899538 "A probe tip configuration, a method of fabricating probe tips and use thereof", the inventors discloses a method of fabricating probe tips applying said so-called moulding technique. The fabrication and use of a metal tip is disclosed in "Fabrication and use of metal tip and tip-on-tip probes for AFM-based device analyses", by T. Hantschel et al. Proc. of SPIE, 3512, pp. 92-103, 1998. A method for manufacturing full metal probes is disclosed in "Fabrication of an all-metal atomic force microscope probe", J.P. Rasmussen, Proc. Of Transducers '97, p 463-466, 1997 or in "The fabrication of a full metal AFM probe and its applications for Si and InP device analysis", T. Hantschel et Al., Proc. Micromachining and Microfabrication conference, 1999. This manufacturing method is schematically illustrated in figure le-1f. In figures 1e and 1f the cantilever is drawn in side view for the purpose of teaching.

The above mentioned process method suffers from the following disadvantages:
1. The wafer needs to be processed from both sides whereby precautions have to be taken to protect the non-processed side.
2. A lithographic tool, e.g. a mask aligner, is required to align patterns defined on the backside of the substrate to the front or topside of the wafer.
3. The backside of the silicon substrate will be etched to release at the front-side the cantilever with metal tip (see fig 1a,e) and hence the substrate can not be re-used.
4. This backside etching requires wafer scale uniformity of e.g. wafer thickness, etch speed, etch selectivity to avoid local over-etching of the tip and/or probe and it is a time consuming step.
5. During this etch step the tip, e.g. its radius or sidewalls, can be modified by the etch chemicals.

In European Patent No. 0763844 entitled "method of manufacturing micro-tip and female mould substrate therefor, and method of manufacturing probe with micro-tip" some of these disadvantages are indicated. The inventor T. Yagi proposes a method to overcome some of the above-mentioned disadvantages, as illustrated in figure 2. According to European Patent No. 0763844 the first substrate is used to define the probe tip (23) while the second substrate is used to define the cantilever. Depending on the choice of the second substrate or its stack composition several types of cantilevers can be obtained. The first substrate could be re-used.

The above mentioned process method still suffers from the following disadvantages:
1. Two substrates are required to manufacture a probe tip with cantilever.
2. The metal, peeling layer and substrate have to be chosen such to obtain the correct relative strength of the different layers to allow tearing off the first second substrate from the probe tip.
3. The second substrate still requires an etching of the rear surface to define a cantilever and to release the probe tip. All problems related to such rear side etching remains.

WO99/56176 discloses a method of manufacturing a probe tip configuration comprising a cantilever beam and a probe tip from photoresist. First a silicon substrate is patterned and etched to form a tip-like indent. A photoresist layer is spin-coated over the substrate. This photoresist layer also fills the tip-like indent. Said photoresist layer is patterned to form the cantilever tip out of said photoresist. Finally the cantilever with tip is lifted-off from the substrate. To improve this step a sacrificial layer might be placed between the substrate and the photoresist layer. Chemical removal of the sacrificial layer improves the step of separating said cantilever with tip from said substrate.

### Aims of the invention

It is an aim of the invention to disclose a cost and time efficient method to manufacture probes used in scanning microscopy, e.g. AFM, STM, SSRM or likewise. This method only comprises front side processing steps and avoids the backside lithography and time consuming etching steps required to create a probe membrane or to release the probe membrane. This method requires only one substrate to form a fully probe consisting of probe tip, cantilever and probe membrane. This method allows easy removal of the probe prior to mounting the probe into a scanning microscope.

Another aim of the present invention is to disclose a method for manufacturing a full metal probe only comprising front side lithography steps, allowing the probe tip and the cantilever to be separately processed. Hence the probe tip can be made from a material or metallisation scheme different from that of the cantilever. The characteristics of the probe tip can optimised independently from the cantilever.

### Summary of the invention

It is one object of the invention to disclose a cost and time efficient method to manufacture probes used in scanning microscopy, e.g. AFM, STM, SSRM or likewise. This method only comprises front side processing steps and avoids the backside lithography and time consuming etching steps required to create a probe membrane or to release the probe membrane.

One object of the invention is to present a method comprising the steps of providing a substrate, depositing on said substrate a hard mask. During a first patterning step a mould is created in said hard mask and said substrate. A first layer is deposited on said patterned hard mask. This first layer has a sufficiently high enough adhesion to said hard mask to allow further processing, but this adhesion force is weak enough to be overcome when peeling the probe gradually from said underlying hard mask. During a second patterning step said first layer is patterned to form a probe tip configuration comprising a cantilever beam, a probe tip and a contact area. By partially under-etching said probe tip configuration from the front side of the substrate, the probe tip configuration can be removed from said substrate by lifting the probe.

Said method can further comprise the step of forming selective to said patterned first layer at least one additional layer before under-etching said patterned stack.

Said method can further comprise the step of mounting a holder chip to said probe tip configuration before peeling of the probe.

Said hard mask can be nitride, oxide, oxynitride or a combination of layers. Said first layer can be a metal, preferably a stack of Ti:W and Au.

Another object of the invention is to present a method for manufacturing a full metal probe only comprising front side lithography and processing steps, allowing the probe tip and the cantilever to be separately processed. Hence the probe tip can be made from a material or metallisation scheme different from the cantilever. After depositing the first layer or a stack of layers the area of the probe tip is defined in an intermediate, third, patterning step. Hereafter a second layer can be deposited on said hard mask and said patterned first layer. This second layer will be patterned in the last patterning step to define the probe tip configuration consisting of a contact area, a cantilever beam and the probe tip.
Said second layer can be a metal, preferably a stack of Ti:W and Au.

Said method can further comprise the step of forming selective to said patterned second layer at least one additional layer before under-etching said patterned stack.

### Short description of the drawings

All drawings are intended to illustrate some aspects and embodiments of the present invention. Devices and fabrication steps are depicted in a simplified way for reason of clarify. Not all alternatives and options are shown and therefore the invention is not limited to the content of the given drawings. Like numerals are employed to reference like parts in the different figures.
Figure 1 represents a prior art method of manufacturing a full metal probe comprising a tip, cantilever and membrane applying the moulding technique, illustrated by cross sectional views

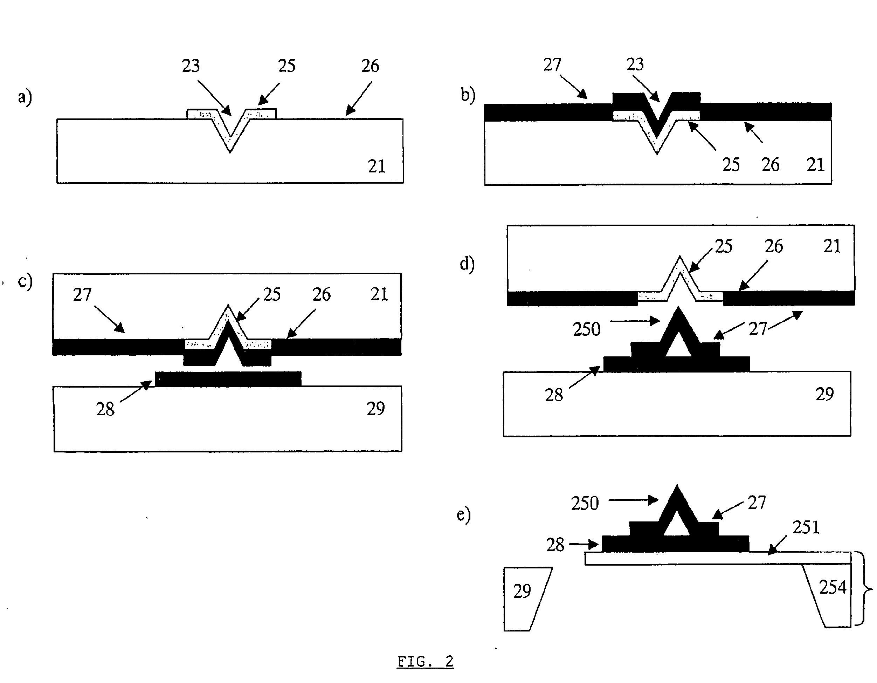

Figure 2 represents a prior art method of manufacturing a tip to avoid backside etching of the moulding substrate, illustrated by cross sectional views
Figure 3 represents a process scheme for peel-off probes made by two lithography steps, upper part is top view, and bottom part is a cross sectional view along section AA.
Figure 4 represents a probe with 4 cantilevers illustrating the peel-off process illustrating the options of fully or partially under-etching the probe
Figure 5 represents a probe removal by peel-off according to an embodiment of the present invention
Figure 6 represents a SEM picture of full metal peel off probe according to the preferred embodiment
Figure 7 represents a topography measurements done on a SrTiO3 calibration sample in tapping mode. Left side shows the AFM picture. Right side shows the measured height h measured along the cross section x.
Figure 8 represents a process scheme for peel-off probes with different metallization scheme for probe tip and cantilever, upper part is top view, and bottom part is a cross sectional view along section AA
Figure 9 represents a metal cantilever with hardened tip made by peel off according to one embodiment of the invention.
Figure 10 represents I-V measurements in point contact mode using an unhardened Ni tip (a) or a hardened Ni tip (b) according to an embodiment of the invention
Figure 11 represents a comparison of unhardened Ni pyramidal tip (a) and hardened Ni pyramidal tip (b), diamond pyramidal tip (c) according to an embodiment of the invention using SSRM on InP(S) substrate comprising an npn structure.

### Detailed description of the invention

In relation to the appended drawings the present invention is described in detail in the sequel. It is apparent however that a person skilled in the art can imagine several other equivalent embodiments or other ways of executing the present invention, the scope of the present invention being limited only by the terms of the appended claims.

In a first aspect of the present invention a method for manufacturing probes only applying front side processing steps, more precisely lithographic steps, is disclosed. The method allows an easy removal of the probe tip by peeling off the manufactured probe from the underlying substrate.

In a first embodiment of the present invention a method for manufacturing a scanning probe requiring only front side processing steps is disclosed. This method comprises only two front side lithographic steps. The peel-off effect is achieved by selectively metallising the area of the probe tip configuration. This metal layer has a sufficiently high enough adhesion to the substrate to allow further processing, but this adhesion force is weak enough to be overcome when peeling the probe gradually from the wafer.

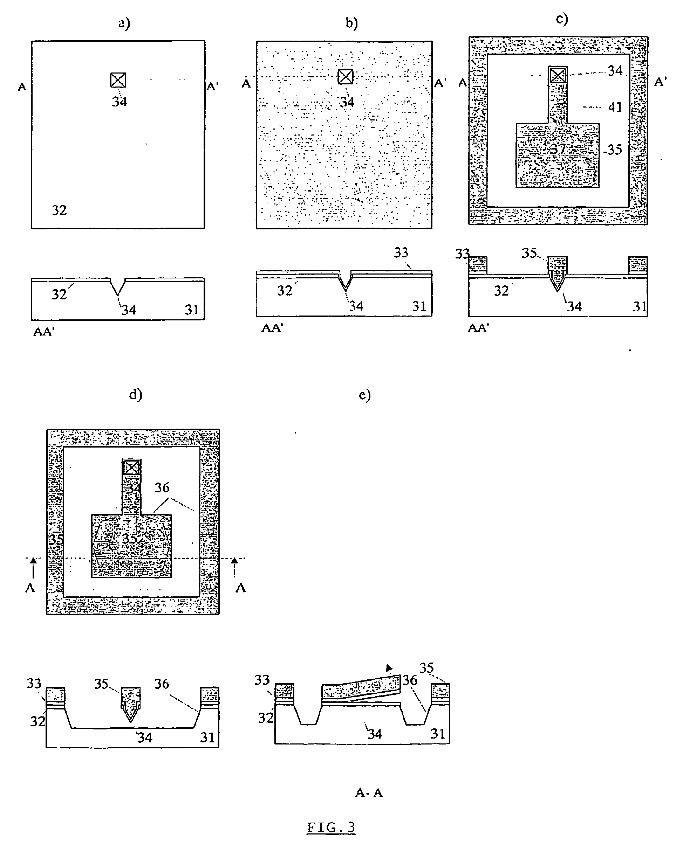

This method comprises the following steps. During the first patterning step a mould (34) is formed in the starting substrate (31), preferably a silicon wafer. (fig 3a) This mould can have various forms: pyramidal, a truncated cone, a cylinder. In case a silicon wafer is used a truncated pyramidal etch pit is formed by anisotropically etching the substrate trough an opening defined in a masking layer formed on top of the substrate. Such a masking layer can be a photo resist or a hard mask (32), e.g. nitride, oxide, oxynitride or a combination of layers. This step of defining the probe tip configuration comprises the first front side lithographic step.

On top of the first surface, i.e. the top surface of the patterned masking layer (82), in which the mould is defined, a first layer (33), preferably metal, is deposited. (fig 3b)

During the second patterning step the probe tip configuration is defined (fig 3c). The probe tip configuration consists of the probe tip (34), the cantilever (41) and the contact area (37). Selective to this first layer additional layers (35) can be deposited using techniques known to a person skilled in the art. If the first layer is a metal additional layers can be plated onto this first layer to create a stack having the desired properties. Such properties are e.g. the mechanical strength of the cantilever that may require a certain thickness, wear-out properties of the probe tip that may require a certain stack composition and hence puts also requirements on the first layer. Between the first layer and the first surface a high contact force exists to allow further processing, but this contact force must be low enough to allow gradually peeling off the probe. Further processing can comprise wet processing steps such as plating, wet etching, cleaning or temperature processing steps such as annealing steps.

After the desired stack is formed the probe tip configuration is partially under-etched (36) (fig 3d) from the front side of the substrate. If a hard mask is used, first the hard mask is removed using the probe tip configuration as a masking layer. Underneath the area of the probe tip configuration the hard mask remains. Then the substrate is etched from the front side selective to the probe tip configuration. Partially under-etching might only release the probe tip from the substrate, but might also release the cantilever. Preferably this under-etching is done using an isotropic etch chemistry, e.g. a wet etch such as a KOH-mixture in case of silicon substrates. The probe can now be peeled off from the substrate (fig 3e)

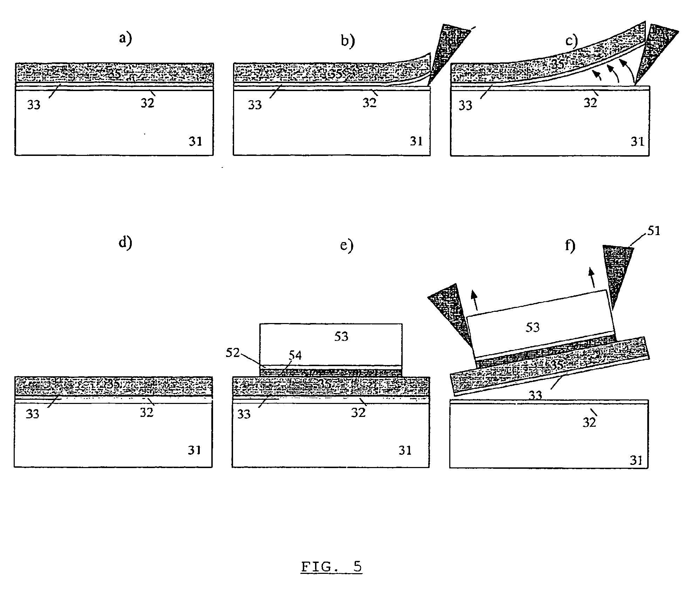

A holder chip (53) can be attached to the probe, e.g. to the contact area if formed, to ease further handling or mounting of the probe. If so, a substantial part of the probe tip configuration, comprising the first layer and additional layers formed upon, is temporarily spaced apart from the underlying substrate or hard mask. (fig 5c) The holder chip is attached to the probe (fig 5e) and holder chip with the probe is then fully removed from the first surface (fig 5f).

In a second preferred embodiment of this aspect a method for manufacturing a full metal probe only applying two front side lithographic steps is disclosed.

The starting substrates (31) were (100)-Si wafers having a diameter of 150 mm. These wafers were covered (32) with 470 nanometer (nm) thermally grown oxide, SiO₂, and 150nm low-pressure chemical vapour deposited (LPCVD) nitride, Si₃N₄. (see figure 3a) Photoresist was spun onto the wafers and squares (34) of 40x40 square micrometer (µm²) were opened in the photoresist during the first lithography step. These squares define the tip area (34). This resist pattern was then transferred to the Si₃N₄ layer by reactive ion etching (RIE) using a SF₆ : O₂ etching mixture. Next, the resist was removed and the nitride pattern was transferred to the SiO₂ layer by etching the oxide layer with buffered HF (BHF). Inverted pyramids were then etched in 30% KOH at 70°C for 55 minutes. The wafer surface was covered with a 10nm thick layer of sputtered Ti:W followed by a 30 nm thick layer of evaporated Au (33). (see figure 3b)

Photoresist was again spun onto the wafer. The resist outside the area of the probe tip configuration was removed by the second lithography step, thereby leaving the area of the probe tip configuration covered with resist. The Au layer was etched in a solution of KI:I₂:H₂O. Then the Ti:W layer was removed by RIE in a SF₆ atmosphere. Next, the photoresist was stripped.

A 12 µm thick Ni layer (35) was deposited on the area of the probe tip configuration by electroless Nickel (Ni) plating. Prior to this plating the wafer was pre-treated in a PdCl₂ solution which helps to initiate the autocatalytic Ni deposition. The plating was done in two steps. First, 1 µm of Ni was deposited using the MeTeC-NiP-LT bath from OTB Berlin (Berlin, Germany). The bath temperature was 70°C and the deposition time was 10 minutes. This solution showed in all experiments an excellent starting behaviour but the plated Ni films had a rough surface that would prevent the laser light from being reflected to the detector in the AFM. This first layer is therefore used as a starting layer for the next plating step. The second plating step was done using the ENPLATE Ni 434E bath from Enthone-OMI ('s-Hertogenbosch, Netherlands) at 85°C for 1 hour until its final value of 12 µm. Rough Ni surfaces were smoothed after being plated for some time in the Enthone-OMI solution. After plating the wafer was rinsed in a water bath which had the same temperature as the plating bath in order to prevent the formation of mechanical stress in the plated Ni film. Rinsing the wafer in cold water immediately after plating resulted in cracks in the Ni cantilevers and the lift-off of plated structures. It should be mentioned that a fresh Enthone-OMI solution had to be used for each plating run. The structures were only partially plated if the same bath was used twice. The OTB-Berlin bath showed a good long-term stability and could be used for many runs. (see figure 3c) The selective deposition of the thick Ni films was improved by applying this two-step plating process.

The Si₃N₄ layer, outside the area of the probe tip configuration, was etched away by RIE in an SF₆:O₂ atmosphere using the plated Ni film as an etching mask. The SiO₂ layer underneath the nitride layer was opened in BHF. The tip and the cantilever were finally under-etched along the crystal planes (36) in 30% KOH at 70°C for about 5 hours. After a final rinse in hot water at 70°C and careful N₂ drying the probes were ready to be peeled off from the wafer. (see figure 3d)

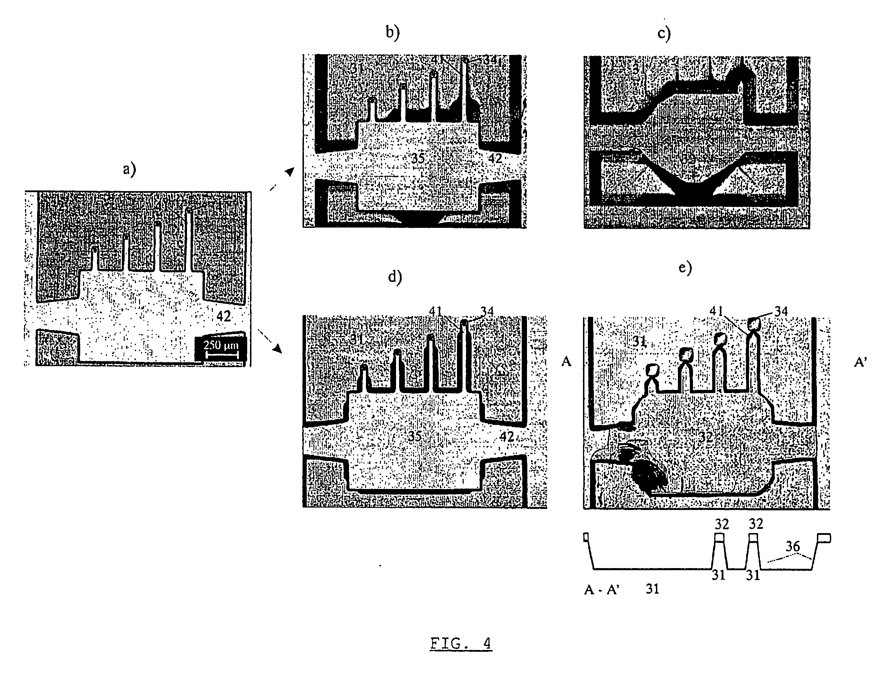

Figure 4 illustrates the under-etching of the cantilevers during the anistropic KOH etching. As can be seen, in this particular design one probe has four cantilevers (41), respectively 200, 400, 600 and 800 µm long. The cantilevers are 65 µm wide and 12 µm thick. The pictures were taken under an optical microscope. Figure 4a shows the probe before etching with the Si₃N₄ layer (32) still in place (Fig 4a). Figures 4b illustrates the case of under-etching the cantilevers (41), the tips (34) and the bridges (42) (Fig 4b). Figure 4c shows the probe after the probe membrane was peeled off (Fig 4c). The yield after under-etching was nearly 100%, which was also confirmed by several process runs. An advantage of the developed procedure is that the probe membranes are not free standing as the full wafer, contrary to conventional probe moulding, supports them. Therefore the probes survive mechanical shocks during and after processing without any problem. The total under-etching time depends on the longest or largest cantilever.

Although the probe membranes can be peeled off directly from the substrate, it is more convenient to mount small holder chips to the contact area (37) prior to peeling. The holder chips easy probe handling and mounting in the AFM. Figure 5 shows the peeling procedure schematically. A cross section of the probe tip configuration before peeling can be seen in Fig 5a. First, one of the two bridges (42, figure 4b) was lifted up with a sharp needle (51) under a microscope (Fig 5b). After the bridge was broken, the probe membrane (35,33) was gradually peeled off (Fig 5c). After removing the needle, the membrane fell back into its initial position (Fig 5d). The connection between the membrane (35,33) and the nitride (32) is no longer present. The probe only remains attached to the substrate via the unbroken bridge. Silicon chips (53) (3.0 mm long, 1.2 mm wide, 0.6mm thick) metallized with 20 nm Ti:W+45 nm Ni+100 nm Au (52) were then soldered (54) to the probe membranes (35) by a procedure which is described in detail in "Mounting of moulded AFM probes by soldering" , Proc of SPIE 4175, 2000. After soldering, the probe was peeled off completely only using a pair of tweezers (51) (Fig 5f). The whole wafer containing about 600 probes was mounted in this way. By partially peeling off the probe membranes before the soldering step the removal of the probe with holder chip turned out to be very easy and didn't require additional handling.

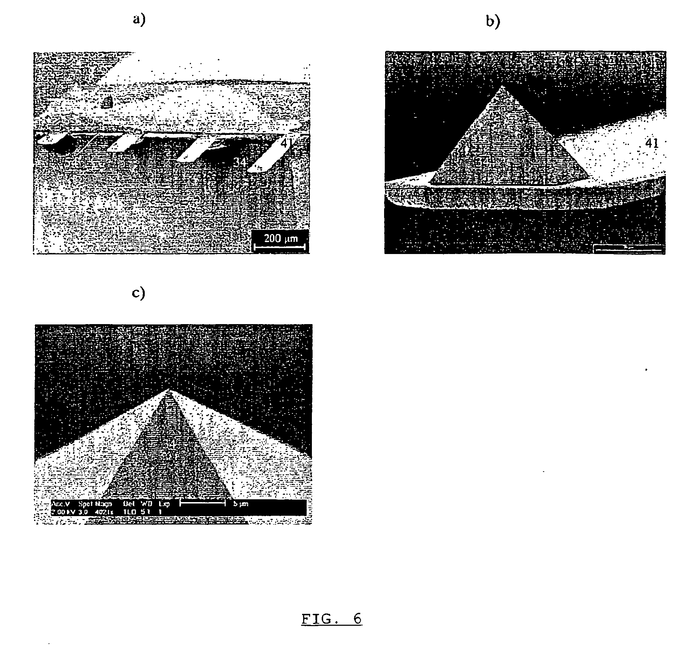

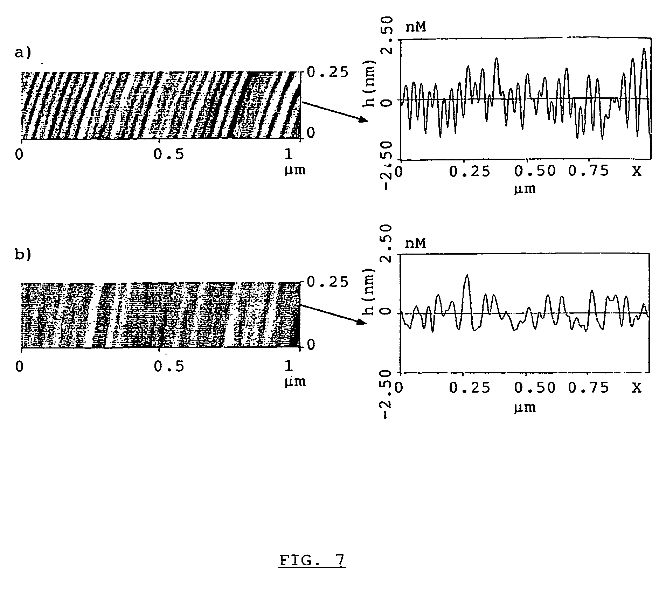

Fig 6a shows a peel-off probe after it was removed from the wafer. It can be seen that the metal membrane (33) is fixed to the Si chip (53) by the solder connection (54). The bright area on the probe membrane is metal which indicates the peel-off area. The dark area is Si₃N₄ from the under-etched area. Fig 6b shows the end of a full metal cantilever beam. It can be seen that cantilever (41) and metal pyramid (34) are well defined. A close-up of the tip is shown in Fig 6c. The tips had a radius of typically 50 to 100nm which is slightly higher compared to previous fabricated probes, typically 20 to 50nm. This was due to the long under-etching time of 5 hours where the tip was attacked by the KOH. Figure 7 compares topography measurements on a calibration surface, such as SrTiO₃, with a Si cantilever with integrated metal pyramid and a peel off probe according to the invention. The metal pyramid on the Si cantilever is clearly sharper than the one on the peel off probe.

Before peeling off the probe the metal cantilevers are fully under-etched leading to the problems mentioned above. Therefore, the under-etching time in KOH was reduced in the next runs. This was achieved by using shorter cantilevers or peeling off the contact area and the cantilevers instead of under-etching them. The etching time was reduced from 5 hours to 1 hour which corresponds with an etch depth of 40 µm for the given etch solution. The reduced etch time resulted in a substantially reduction of the process time but also in smaller tip radii. AFM or STM microscope with small probe tip radii can measure samples with a higher resolution. This partial under-etching is also shown in figure 4. Figure 4d shows the probe having only the probe tip (34) etched free. A schematic cross-section of figure 4d is drawn underneath the picture. Only during the last minutes of the etching of the tip is exposed to the etching solution. After cutting one bridge (42), the probe was gradually peeled off as described above. Figure 4e shows the wafer surface after removal of the probe. So if only the pyramidal tip (34) is under-etched, the probe with hardened probe tip (34), cantilever (41) and contact (37) area can still be peeled off.

In a second aspect a method for manufacturing a full metal probe is disclosed only comprising front side lithography steps, allowing the probe tip and the cantilever to be separately processed. Hence the probe tip can be made from a material or metallisation scheme different from the cantilever.

In a first embodiment of this aspect the probe tip and cantilever are made of the same material but in a separate and different metallisation scheme.

It is known in the state of the art that the hardness of as-deposited Ni films made by electroless plating can be increased from about 500HV (HV: Hardness Vickers) up to 1000HV by an annealing the Ni-plated probe tip at 300 to 400°C. Such methods are for example disclosed in "Nickel and chromium plating", 2nd edition, J.K. Denis et al., Butterworths ltd, p. 269-277, 1986. The plating step and the subsequent annealing step are to be executed after the processing of the probe tip. After applying this procedure on full metal probes a strong bending of the cantilever was however observed, probably due the thermomechanical stress in the cantilever. Therefore the step of annealing the Ni probe tips has to be executed before manufacturing the Ni cantilevers. This separate processing of probe tips and cantilever was achieved by carrying out two metallization steps. The overall fabrication process is similar to that described in another embodiment of this invention and therefore only the main steps are discussed.

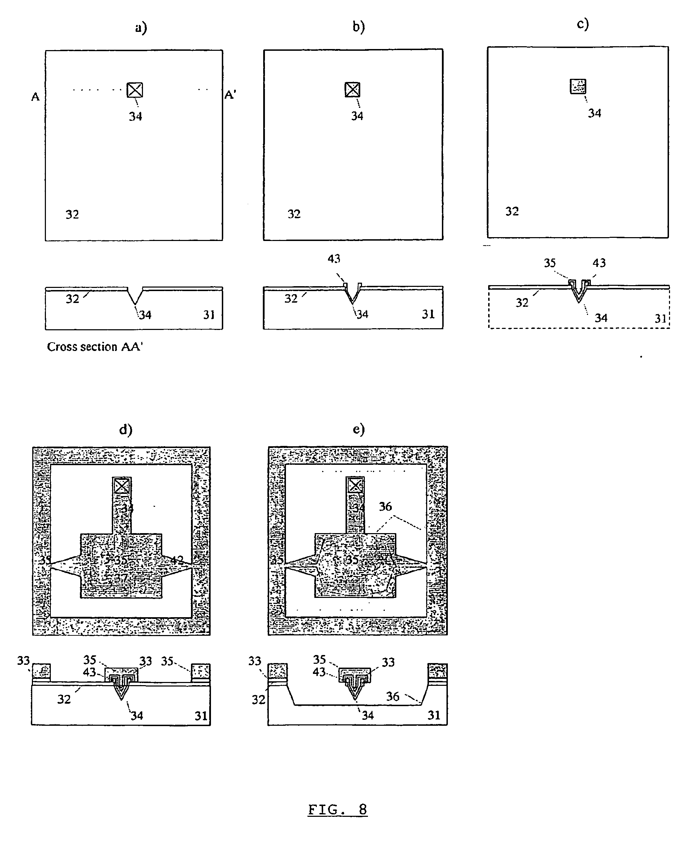

After etching the inverted pyramid (see figure 8a) the tip area (34) was metallized by a lift-off procedure. Photoresist was again spun onto the wafer. Applying an additional lithography step will remove the resist substantially above the inverted pyramids. During this additional lithography step the probe tip mask of the first lithography step, used to define the probe tip area (34), is used again. The wafer was then covered with 10nm Ti:W+30nm Au (43). The metal film was structured by lift-off leaving only the probe tip area covered with metal, applying techniques known to a person skilled in the art (see figure 8b). The thickness of the metal stack within the area of the probe tip configuration was then increased up to 4µm by exposing the wafer to the Ni plating solution from OTB-Berlin at 70°C for 30 minutes as disclosed in another embodiment of the invention (see figure 8c). The pyramidal tip is thus at least partially filled. Afterwards, some tips were hardened by rapid thermal annealing (RTA) for 10 minutes at 300°C. Other tips were annealed at 400°C. Longer anneal times, e.g. 1 hour, can improve the hardness of the probe tip. The full wafer surface was then again coated with 10 nm Ti:W+30nm Au (33). In the last lithography step the area of the probe tip configuration (35) was covered with resist and the stack of Au and Ti:w is etched away outside this area (see figure 8d). The two-step Ni plating sequence was again applied to metallize the area of the probe tip configuration, as disclosed in another embodiment. The cantilevers (41) were under-etched (see figure 8e) and the probes were peeled off from the wafer.

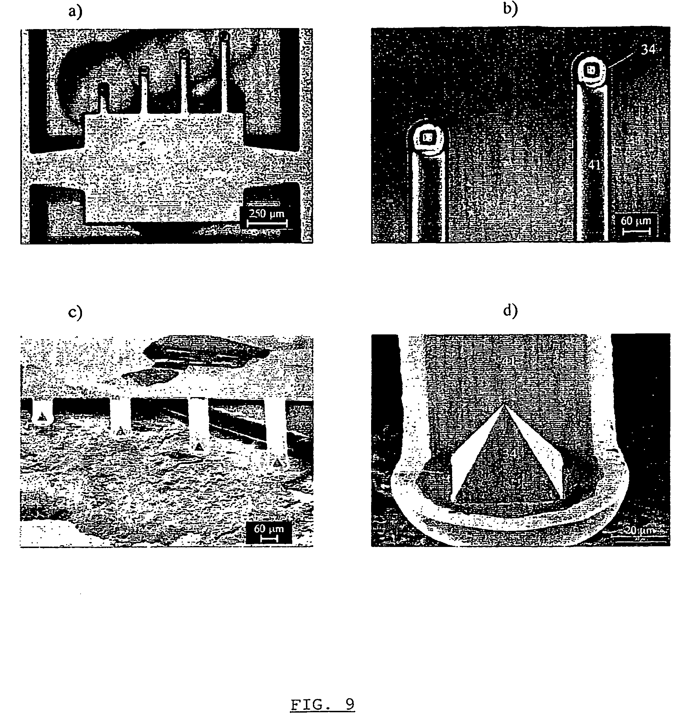

Figure 9a shows the probe topside imaged by an optical microscope after the under-etching was completed. The Ni surface (35) is very smooth and the separately metallised tip area (34) can be clearly distinguished in Figure 9b. The tip area is slightly higher than the cantilever because it was plated twice. Figure 9c shows a metal membrane from the tip side imaged by scanning electron microscopy (SEM). The pyramidal tip shown in the close-up in Figure 9d was annealed at 400°C. The clean side walls indicate that there was no reaction between the Ti:W and the Si during the RTA step.

In a second embodiment of this aspect the probe tip and cantilever are made of the different materials, each having an appropriated metallization scheme.

Although the same metal layers are applied for tip and cantilever in this particular process, the described procedure can also be used to make the tip from materials different from the cantilever material, applying e.g. Cr or diamond to obtain a harder probe tip. The anneal time can depend on the material used and can be further adapted depending on the desired hardness of the probe tip. This does not affect the peeling procedure. The separation between the two metallisation schemes is done by applying an additional patterning step to pattern the probe tip material. Subsequent process steps to improve the quality of the probe tip, such as annealing, can be done after this patterning. Additional material deposition can be done afterwards if the deposition process is selective with respect to the patterned probe tip. Otherwise additional patterning steps are required. As no backside etching is performed the probe tip, and later on, also the cantilever are supported by the full silicon wafer.

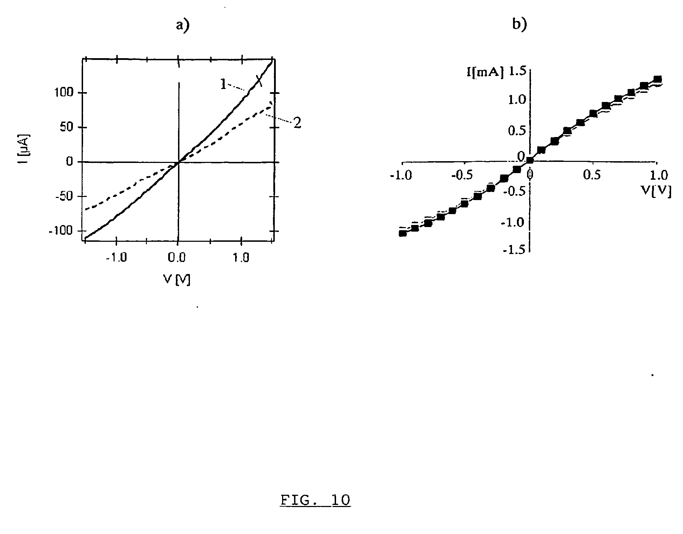

Figure 10 -11 illustrate the good electrical and mechanical behaviour of probe tips made according to one or more embodiments of the present invention.

I-V measurements on n-type Si (ρ=0.1 Ωcm) were done in order to find out if the hardened metal tips are able to establish a stable Ohmic contact on Si. It is well-known that an Ohmic contact on Si can only be obtained by transforming the Si underneath the tip to the so-called metallic ß-tin phase. A pressure of 10-12 GPa is needed for that and the unhardened Ni tips withstood this high pressure only for a very short time as can be seen in figure 10a. The first I-V curve (solid line) was collected after increasing the force until the point where the contact behaviour changed from Schottky to Ohmic. The second I-V curve (dashed line) was collected shortly afterwards and showed already an increase in resistance indicating rapid tip degradation at high forces. The electrical contact was lost in the next measurement. Figure 10b shows a set of 20 I-V curves measured using a peel-off probe where the Ni tip was hardened by an annealing step at 400°C for 10 minutes. It can be clearly seen that the hardened probe tip withstands the high forces in point contact and holds the Ohmic regime. The Ohmic regime was also achieved after scanning the tip over the surface for a while and going back into point contact.

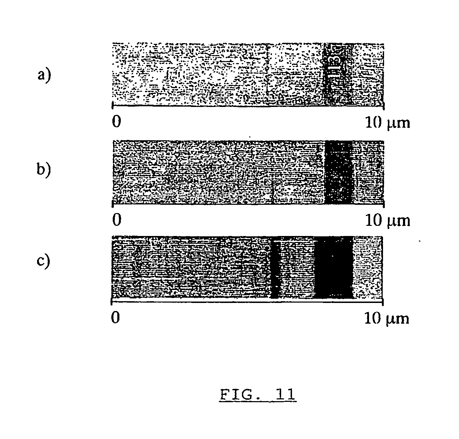

Good results on spreading resistance microscopy (SSRM) on InP device structures have been obtained with metal pyramids integrated into Si cantilevers. A study was done in order to compare the hardness of unhardened and hardened probes with each other (figure 11). Three kinds of Ni tips were tested: unhardened Ni tip (a), Ni tip hardened at 300°C (b), and metal cantilever with integrated diamond tip (c). The test sample was a multilayer InP structures which was epitaxially grown by metal-organic chemical vapor deposition (MOCVD). The layer structure was p-n-p on a semi-insulating InP(S) substrate where the n-type layer was Si doped and the p-type layers were Zn doped. SSRM measurements were done on a cleaved cross section using a scan size of 10x10µm² and a scan speed of 1 Hz. The sample was biased at 3.0 V and the same high force was applied to the three probe tips during scanning. No significant difference was found between hardened and unhardened Ni tips. The peel off probes performed as good as the Si cantilever probes manufactured according to the prior art technology.

## Claims

1. A method of manufacturing a probe tip configuration comprising a cantilever beam (41), a probe tip (34) and a contact area (37), said method comprises the steps of:
- etching a substrate (31) using a first patterned masking layer (32) as an etch mask, said etching creating a mould (34) in said substrate (31),
- depositing a first layer (33) on said mould (34) and on said first patterned masking layer (32)
- patterning said first layer (33) to form the probe tip configuration
**characterised in that** it further comprises the steps of:
- partially under-etching the probe tip configuration using said patterned first layer (33) as a hard mask, and,
- peeling off the probe tip configuration from the underlying first patterned masking layer (32).

2. A method as recited in claim 1 further comprising the step of using said patterned first layer (33) as a mask to remove said first patterned masking layer (32).

3. A method as recited in claim 1 further comprising the step of selectively depositing additional layers (35) on said patterned first layer (33).

4. A method as recited in claim 3 wherein said first layer (33) is a metal and said selectively depositing of additional layers (35) is done by plating.

5. A method as recited in claim 4 wherein said first layer (33) comprises Ti, W and Au and said additional layers (35) comprise Ni.

6. A method as recited in claim 1 further comprising, prior to said under-etching of said probe tip configuration, the steps of:
- temporarily spacing apart a substantial part of said probe tip configuration and said underlying first patterned masking layer (32), and,
- attaching a holder chip (53) to said contact area (37)

7. A method as recited in claim 1 wherein said partially under-etching of said probe tip configuration at least under-etches the probe tip (34).

8. A method as recited in claim 1 wherein said partially under-etching of said probe tip configuration at least under-etches the probe tip (34) and the cantilever beam (41).

9. A method as recited in claim 1, further comprising the steps, prior to the step of depositing said first layer; of
- depositing a second layer (43) on said mould (34) and on said first patterned masking layer (32), and,
- patterning said second layer (43) to form the probe tip (34).

10. A method as recited in claim 9 wherein said first (33) and said second layers (43) are of the same material.

11. A method as recited in claim 10 wherein said material comprises Ti, W and Au.

12. A method as recited in claim 9 wherein said first (33) and said second (43) layers are of a different material.

13. A method as recited in claim 12 wherein said first layer (33) comprises Ti, W and Au and said second layer (43) comprises Cr or Diamond.

14. A method as recited in claim 9 to 13 wherein an annealing step is performed prior to the deposition of said first layer.

15. A method as recited in all foregoing claims wherein said substrate (31) is silicon.

16. A method as recited in all foregoing claims wherein said first patterned masking layer (32) is selected from the group of oxides, nitrides or oxynitrides.

## Patentansprüche

1. Verfahren zum Herstellen einer Sondenspitzenkonfiguration, die einen Kragbalken (41), eine Sondenspitze (34) und einen Kontaktbereich (37) umfasst, wobei das Verfahren die Schritte umfasst:
- Ätzen eines Substrats (31) unter Verwendung einer ersten strukturierten Maskierungsschicht (32) als Ätzmaske, wobei das Ätzen eine Form (34) im Substrat (31) bildet,
- Ablagern einer ersten Schicht (33) auf der Form (34) und auf der ersten strukturierten Maskierungsschicht (32)
- Strukturieren der ersten Schicht (33), um die Sondenspitzenkonfiguration zu bilden
**dadurch gekennzeichnet, dass** es ferner die Schritte umfasst:
- teilweises Unterätzen der Sondenspitzenkonfiguration unter Verwendung der ersten strukturierten Schicht (33) als Hartmaske, und,
- Ablösen der Sondenspitzenkonfiguration von der darunter liegenden ersten strukturierten Maskierungsschicht (32).

2. Verfahren nach Anspruch 1, das ferner den Schritt des Verwendens der strukturierten ersten Schicht (33) als Maske zum Entfernen der ersten strukturierten Maskierungsschicht (32) umfasst.

3. Verfahren nach Anspruch 1, das ferner den Schritt des selektiven Ablagerns von weiteren Schichten (35) auf der strukturierten ersten Schicht (33) umfasst.

4. Verfahren nach Anspruch 3, wobei die erste Schicht (33) ein Metall ist und wobei das selektive Ablagern von weiteren Schichten (35) durch Plattieren erfolgt.

5. Verfahren nach Anspruch 4, wobei die erste Schicht (33) Ti, W und Au umfasst und wobei die weiteren Schichten (35) Ni umfassen.

6. Verfahren nach Anspruch 1, das ferner, vor dem Unterätzen der Sondenspitzenkonfiguration, die Schritte umfasst:
- vorübergehendes Beabstanden eines wesentlichen Teils der Sondenspitzenkonfiguration und der darunter liegenden ersten strukturierten Maskierungsschicht (32), und,
- Anbringen eines Halterungschips (53) an dem Kontaktbereich (37).

7. Verfahren nach Anspruch 1, wobei das teilweise Unterätzen der Sondenspitzenkonfiguration zumindest die Sondenspitze (34) unterätzt.

8. Verfahren nach Anspruch 1, wobei das teilweise Unterätzen der Sondenspitzenkonfiguration zumindest die Sondenspitze (34) und den Kragbalken (41) unterätzt.

9. Verfahren nach Anspruch 1, das ferner, vor dem Schritt des Ablagerns der ersten Schicht, die Schritte umfasst:
- Ablagern einer zweiten Schicht (43) auf der Form (34) und auf der ersten strukturierten Maskierungsschicht (32), und,
- Strukturieren der zweiten Schicht (43), um die Sondenspitze (34) zu bilden.

10. Verfahren nach Anspruch 9, wobei die erste Schicht (33) und die zweite Schicht (43) aus dem gleichen Material sind.

11. Verfahren nach Anspruch 10, wobei das Material Ti, W und Au umfasst.

12. Verfahren nach Anspruch 9, wobei die erste Schicht (33) und die zweite Schicht (43) aus einem unterschiedlichen Material sind.

13. Verfahren nach Anspruch 12, wobei die erste Schicht (33) Ti, W und Au umfasst und die zweite Schicht (43) Cr oder Diamant umfasst.

14. Verfahren nach Anspruch 9 bis 13, wobei ein Erwärmungsschritt vor dem Ablagern der ersten Schicht durchgeführt wird.

15. Verfahren nach allen vorstehenden Ansprüchen, wobei das Substrat (31) Silicium ist.

16. Verfahren nach allen vorstehenden Ansprüchen, wobei die erste strukturierte Maskierungsschicht (32) aus der Gruppe von Oxiden, Nitriden oder Oxynitriden ausgewählt ist.

## Revendications

1. Procédé de fabrication d'une configuration de pointe de sonde comprenant une poutrelle en porte-à-faux (cantilever) (41), une pointe de sonde (34) et une zone de contact (37), ledit procédé comprenant les étapes :
- de gravure d'un substrat (31) en utilisant une première couche de masquage à motifs (32) en tant que masque de gravure, ladite gravure créant un moule (34) dans ledit substrat (31),
- de dépôt d'une première couche (33) sur ledit moule (34) et sur ladite première couche de masquage à motifs (32),
- de structuration de ladite première couche (33) pour former la configuration de la pointe de sonde,
**caractérisé en ce qu'**il comprend en outre les étapes consistant :
- à sous-graver partiellement la configuration de pointe de sonde en utilisant ladite première couche à motifs (33) comme masque dur, et
- à détacher la configuration de pointe de sonde de la première couche de masquage à motifs (32) sous-jacente.

2. Procédé selon la revendication 1, comprenant en outre l'étape d'utilisation de ladite première couche à motifs (33) comme masque pour retirer ladite première couche de masquage à motifs (32).

3. Procédé selon la revendication 1, comprenant en outre l'étape de dépôt sélectif de couches supplémentaires (35) sur ladite première couche à motifs (33).

4. Procédé selon la revendication 3, dans lequel ladite première couche (33) consiste en un métal et ledit dépôt sélectif de couches supplémentaires (35) est effectué par placage.

5. Procédé selon la revendication 4, dans lequel ladite première couche (33) comprend du Ti, du W et de l'Au et lesdites couches supplémentaires (35) comprennent du Ni.

6. Procédé selon la revendication 1 comprenant en outre, avant ladite sous-gravure de ladite configuration de pointe de sonde, les étapes :
- d'espacement temporaire d'une partie significative de ladite configuration de pointe de sonde et de ladite première couche de masquage à motifs (32) sous-jacente, et
- de fixation d'un élément de support (53) à ladite zone de contact (37).

7. Procédé selon la revendication 1, dans lequel ladite sous-gravure partielle de ladite configuration de pointe de sonde sous-grave au moins la pointe de sonde (34).

8. Procédé selon la revendication 1, dans lequel ladite sous-gravure partielle de ladite configuration de pointe de sonde sous-grave au moins la pointe de sonde (34) et la poutrelle en porte-à-faux (41).

9. Procédé selon la revendication 1, comprenant en outre les étapes, avant l'étape de dépôt de ladite première couche,
- de dépôt d'une deuxième couche (43) sur ledit moule (34) et sur ladite première couche de masquage à motifs (32), et
- de structuration de ladite deuxième couche (43) pour former la pointe de sonde (34).

10. Procédé selon la revendication 9, dans lequel lesdites première (33) et deuxième (43) couches sont du même matériau.

11. Procédé selon la revendication 10, dans lequel ledit matériau comprend le Ti, le W et l'AU.

12. Procédé selon la revendication 9, dans lequel lesdites première (33) et deuxième (43) couches sont d'un matériau différent.

13. Procédé selon la revendication 12 dans lequel ladite première couche (33) comprend du Ti, du W et de l'Au et ladite deuxième couche (43) comprend du Cr ou du diamant.

14. Procédé selon les revendications 9 à 13, dans lequel une étape de recuit est effectuée avant le dépôt de ladite première couche.

15. Procédé selon toutes les revendications précédentes, dans lequel ledit substrat (31) est du silicium.

16. Procédé selon toutes les revendications précédentes, dans lequel ladite première couche de masquage à motifs (32) est sélectionnée dans le groupe des oxydes, des nitrures ou des oxynitrures.
